Europäisches Patentamt

European Patent Office

Office européen des brevets

(11) Publication number: **0 157 299**
**B1**

(12) **EUROPEAN PATENT SPECIFICATION**

(45) Date of publication of patent specification: **09.11.88**

(21) Application number: **85103292.0**

(22) Date of filing: **21.03.85**

(51) Int. Cl.⁴: **G 01 B 11/02,** G 06 F 15/62,
G 06 K 9/00

(54) **Image processing apparatus.**

(30) Priority: **26.03.84 JP 56196/84**

(43) Date of publication of application:
**09.10.85 Bulletin 85/41**

(45) Publication of the grant of the patent:
**09.11.88 Bulletin 88/45**

(84) Designated Contracting States:
**DE FR GB**

(56) References cited:
**EP-A-0 091 132**
**US-A-4 316 670**

(73) Proprietor: **HITACHI, LTD.**
**6, Kanda Surugadai 4-chome Chiyoda-ku**
**Tokyo 100 (JP)**

(72) Inventor: **Okada, Takushi**
**Gumisawa Higashi Haitsu 2-605 Gumisawa-cho,**
**1154**
**Totsuka-ku Yokohama-shi Kanagawa-ken (JP)**
Inventor: **Sugimoto, Koichi**
**Wakamiya Haitsu 6-304 Yamashita 760-1**
**Hiratsuka-shi Kanagawa-ken (JP)**
Inventor: **Sakaue, Shiyuki**
**Keimei-ryo, Maioka-cho, 850 Totsuka-ku**
**Yokohama-shi Kanagawa-ken (JP)**
Inventor: **Hata, Seiji**
**Jounan 1-20-10**
**Fujisawa-shi Kanagawa-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The present invention relates to a vision system of the kind referred to in the preamble portion of patent claim 1. Such a vision system is known from EP—A—0 091 132.

In recent years, industrial robots have been utilized for the operations of welding, assemblage etc. as parts of FA (Factory Automation), and needs for flexible operations employing a visual sensor etc. have risen. Most of visual systems which have heretofore been used in industrial robots are of a two-dimensional plane vision, in which a two-dimensional image is binary-coded or coded by a Gray-method, a surface of specific shape is extracted by a filtering operation or the like, and the two-dimensional feature quantities of the extracted surface, such as the center of gravity and the principal axes of inertia, are calculated thereby to recognize an object.

Prior art document EP—A—0 091 132 relates to a robot having a vision system comprising an imaging device which takes a two-dimensional image of an object, an image processing device which analyzes the two-dimensional image to detect a contour line, a three-dimensional position measuring device which can measure three-dimensional positions of at least three points on the contour line.

The image processing is based on a triangulation method.

US—A—4 316 670 discloses an apparatus for determining the configuration of a reflective surface consisting of multiple laser fringe pattern transmitters, a random access image dissector camera or receiver, and a computer analysis system.

However, in such a case as according to EP—A—0 091 132 where the object is not placed in plane fashion but is placed in three dimensions, the contour line of the surface obtained from the planar image differs from that of the actual surface of the object, so that accurate recognition has been difficult. It has therefore been earnestly desired to develop a system which can accurately extract the contour line of a surface of specific shape even in three dimensions.

It is the object of the present invention to provide a visual system for an industrual robot etc., comprising an image processing device which makes the recognition, handling etc. of a three-dimensional object possible in such a way that the contour line of a surface of specific shape in three dimensions is extracted by combining a two-dimensional vision and a three-dimensional position measuring device.

This object is achieved with a visual system as claimed.

Dependent claims 2 to 3 are directed on features of preferred embodiments of the vision system according to the invention.

In the following the invention will be explained by the description of preferred embodiments referring to the drawings, in which:

Fig. 1 is a flow chart showing a conventional contour line extraction process;

Figs. 2a and 2b are conceptual views depictive of the difference of filters depending upon the positional relationship between a TV camera and an object;

Fig. 3 is a general arrangement view of an embodiment of an image processing apparatus according to the present invention;

Fig. 4 is an explanatory view of an embodiment of a three-dimensional position measuring device in the apparatus of Fig. 3;

Fig. 5 is an explanatory diagram of slit light beams on an object emitted by the device of Fig. 4;

Fig. 6 is a conceptual diagram of an image screen coordinate system in the apparatus;

Fig. 7 is a diagram for explaining angles defined between the contour lines of the object and the image screen coordinates in the apparatus;

Figs. 8a and 8b are diagrams for explaining the calculation of a rotational angle on a rectangle taken as an example in the apparatus; and

Fig. 9a is a general flow chart showing the flow of precesses in the apparatus, while Figs. 9b—9e are flow charts for elucidating the constituents of the flow chart of Fig. 9a more in detail;

Fig. 10 is a flow chart showing the processes of another embodiment of the present invention;

Fig. 11 is an explanatory diagram of slit light beams on an object in the embodiment of Fig. 10; and

Fig. 12 is an explanatory diagram showing the distortion of a two-dimensional image dependent upon the distance in the embodiment of Fig. 10.

Description of the preferred embodiments

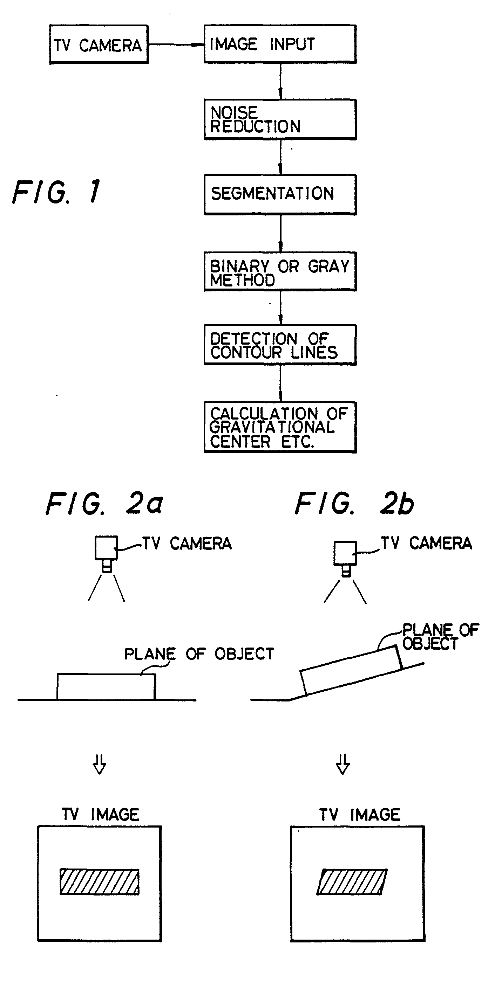

A two-dimensional image applied by a TV camera or the like is processed by an image processor. As shown in Fig. 1 which is a flow chart of a conventional contour line extracting process, the process usually performs noise reduction, segmentation, binary coding or coding by the Gray-method, contour line extraction, and the calculation of a two-dimensional shape including the center of gravity, etc.

Figs. 2a and 2b are conceptual views depictive of the difference of filters depending upon the positional relationship between a TV camera and an object. In a case where, as shown in Fig. 2a, the plane of the object and the TV camera are parallel, an extracted contour line agrees with the actual contour line of the object, so that the contour line can be accurately extracted by performing the filtering operation of a shape desired to be extracted (for example, a rectangle). However, in a case where, as shown in Fig. 2b, the object lies in a position and attitude indefinite in three dimensions and the plane of the object and the TV camera are not parallel, the contour line cannot be extracted when the filter of a shape desired to be extracted (for

2

example, a rectangle) is used as it is. In such a case, it is necessary to detect the three-dimensional attitude of the object and to select and use a filter proper for the shape desired to be extracted. One important feature of the present invention consists in that the extraction of the contour line of the specific shape to be found is permitted using the filter thus selected.

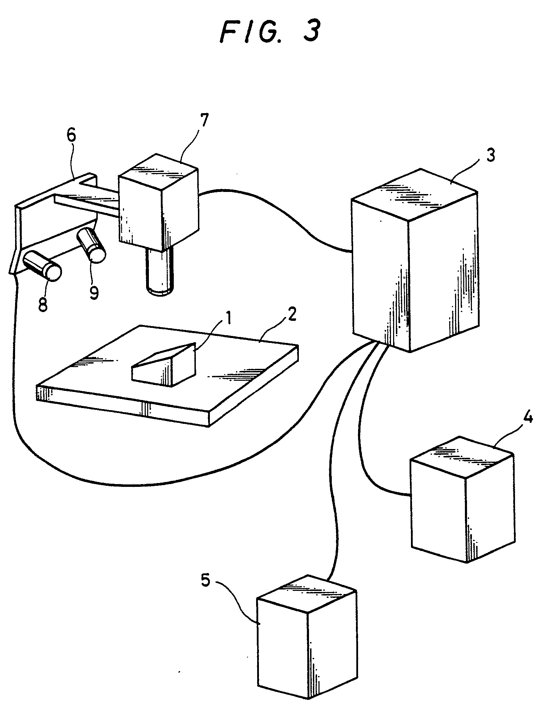

In Fig. 3 numeral 1 designates an object to have its contour line extracted, numeral 2 a bed for placing the object 1 thereon, numeral 3 an image processor, numeral 4 a contour line extraction device, numeral 5 a computer, numeral 6 a three-dimensional position measuring device, numeral 7 a TV camera of the measuring device, and numerals 8 and 9 slit light generators of the measuring device.

The apparatus can extract a contour line of specific shape via the following steps (1)—(4):

(1) The object 1 on the bed 2 is imaged by the television camera 7, and the image is input to the image processor 3.

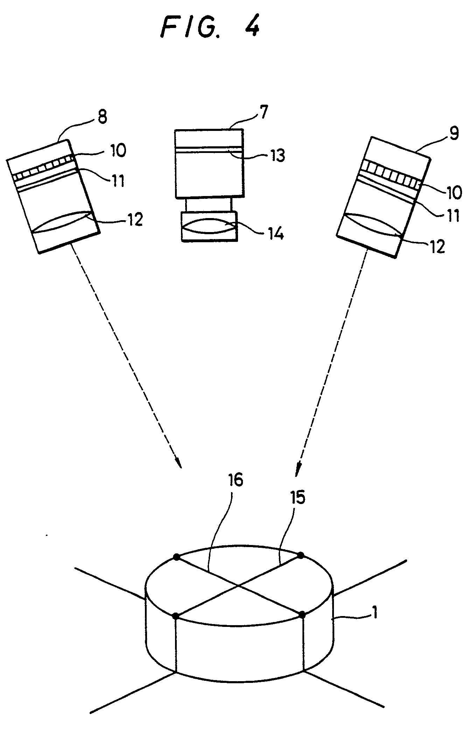

(2) Using the three-dimensional position measuring device 6, the three-dimensional positions of at least three points on the surface edge line of the object are measured. In the present embodiment, a range finder which utilizes slit light is employed as the measuring device. It is a kind of distance measuring device which measures the spatial position with the principle of triangulation, details of which are shown in Fig. 4. The three-dimensional position measuring device 6 is fixed to the TV camera 7, and has the slit light generators 8 and 9 on the left and right sides thereof. Each of the left and right slit light generators 8 and 9 is arranged such that light emitting diodes 10 are arrayed in a row and have their light turned by a slit 11 into a slit light beam, which is converged by a lens 12. Slit light beams 15 and 16 which have impinged on the object 1 are converged by the lens 14 of the TV camera 7 and are focused on the imaging screen 13 thereof.

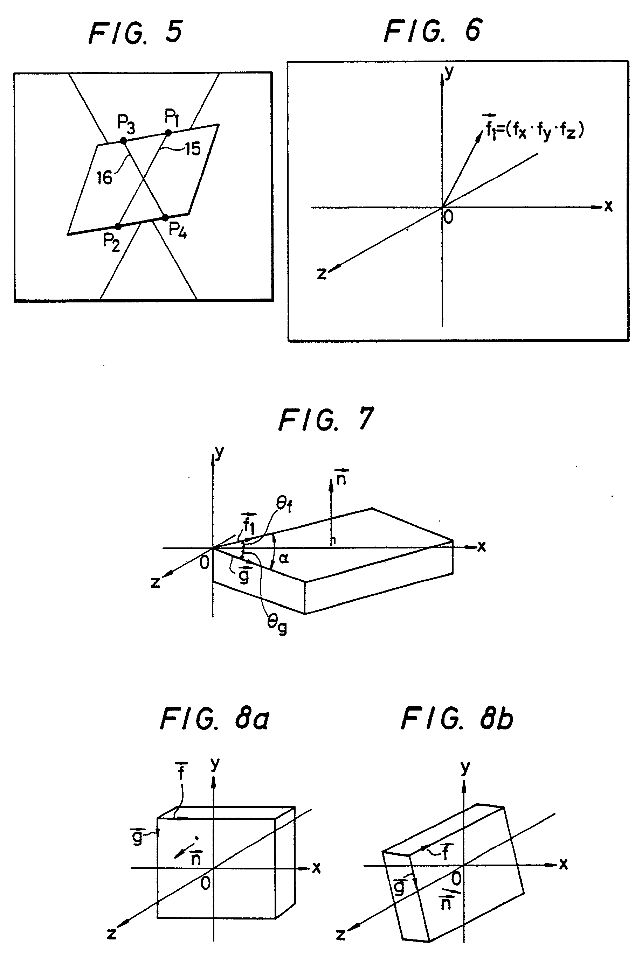

Since the slit light beams impinge aslant to the TV camera 7, these slit light beams impinging on the object 1 as viewed from the TV camera 7 become as shown in Fig. 5. The relative positional relations between the TV camera 7 and the slit light generators 8, 9 are known. Therefore, the three-dimensional coordinates of four points $P_1$, $P_2$, $P_3$ and $P_4$ on the surface edge line of the object 1 as viewed from the TV camera 7 are found on the basis of the principle of triangulation.

(3) On the basis of the three-dimensional coordinates of three points among the four points obtained in the step (2), the computer 5 computes the direction vector $\vec{f}=(f_x, f_y, f_z)$ of one of the surface edge lines of the object and the nomral vector $\vec{n}=(n_x, n_y, n_z)$ of the surface of the object. More specifically, when it is assumed to use the position vectors $\vec{P_1}$, $\vec{P_2}$ and $\vec{P_3}$ of the points $P_1$, $P_2$ and $P_3$ among the four points,

$$\vec{f}=\frac{\vec{P_3}-\vec{P_1}}{|\vec{P_3}-\vec{P_1}|} \tag{1}$$

$$\vec{n}=\frac{(\vec{P_3}-\vec{P_2})\times(\vec{P_3}-\vec{P_1})}{|(\vec{P_3}-\vec{P_2})\times(\vec{P_3}-\vec{P_1})|} \tag{2}$$

At this time, when the coordinate system of the image screen is taken as an x—y plane as shown in Fig. 6, an angle $\theta_f$ which $\vec{f_1}$ defines with an x-axis on the screen is evaluated as shown in Fig. 7 from:

$$\tan \theta_f=\frac{f_y}{f_x} \tag{3}$$

Here, letting $\vec{g}$ denote the direction vector of an edge neighboring the edge line of $\vec{f}$, and assuming that an angle $\alpha$ defined between $\vec{f}$ and $\vec{g}$ be given, the direction vector $\vec{g}=(g_x, g_y, g_z)$ fulfills the relation:

$$\frac{\vec{g}\times\vec{f}}{|\vec{g}\times\vec{f}|}=\vec{n}\sin\alpha \tag{4}$$

Therefore, when $\vec{f}$ and $\vec{n}$ are given on the image screen coordinate system, the values of $\vec{g}$ on the image screen coordinate system are found. At this time, an angle $\theta_g$ which $\vec{g}$ defines with the x-axis becomes:

$$\tan \theta_g=\frac{g_y}{g_x} \tag{5}$$

Accordingly, when it is intended to depict the edge lines having $\vec{f}$ and $\vec{g}$ through filtering, the directions of filters may become $\theta_f$ and $\theta_g$.

By way of example, assuming that $\vec{f}=(1, 0, 0)$ and $\vec{n}=(0, 0, 1)$ have been measured in a rectangle as shown in Fig. 8a, $\vec{g}=(0, -1, 0)$ is obtained by putting $\alpha=90°$ in Eq. (4), and hence, the angles defined with the x-axis by $\vec{f}$ and $\vec{g}$ are $\theta_f=0°$ and $\theta_g=-90°$. Therefore, in order to extract contour lines by the use of filters of, e.g., 3×3 elements, the filters may be as follows:

| −1 | −1 | −1 |
|----|----|----|
| 0  | 0  | 0 · |
| 1  | 1  | 1  |

f:

and g:

| −1 | 0 | 1 |
|----|---|---|
| −1 | 0 | 1 |
| −1 | 0 | 1 |

Assuming that the rectangle be slant in three dimensions as shown in Fig. 8b, the above filters cannot be used as they are. Assuming by way of example that $\theta_f = 45°$ and $\theta_g = -45°$ have been obtained from Eqs. (1)—(5), the following directional filters may be used:

f:

| 1  | 1  | 1 |
|----|----|---|
| −1 | −2 | 1 |
| −1 | −1 | 1 |

and g:

| −1 | −1 | 1 |
|----|----|---|
| −1 | −2 | 1 |
| 1  | 1  | 1 |

(4) The contour line extracting device 4 selects the filters most suited for $\theta_f$ and $\theta_g$ computed by the computer 5, and extracts the contour lines from the binary-coded or multivalue-coded image by the use of the filters.

Lastly, Figs. 9a—9e are flow charts of various processes in the present system. Now, the steps stated above will be explained more in detail on the basis of these charts.

First, as shown in Fig. 9a, in the image processor 3, the slit image taken on the imaging screen 13 of the TV camera 7 is sent to corner point detection means 17 to detect corner points, which are then sent to edge vector and normal vector calculation means 18 and edge angle calculation means 19.

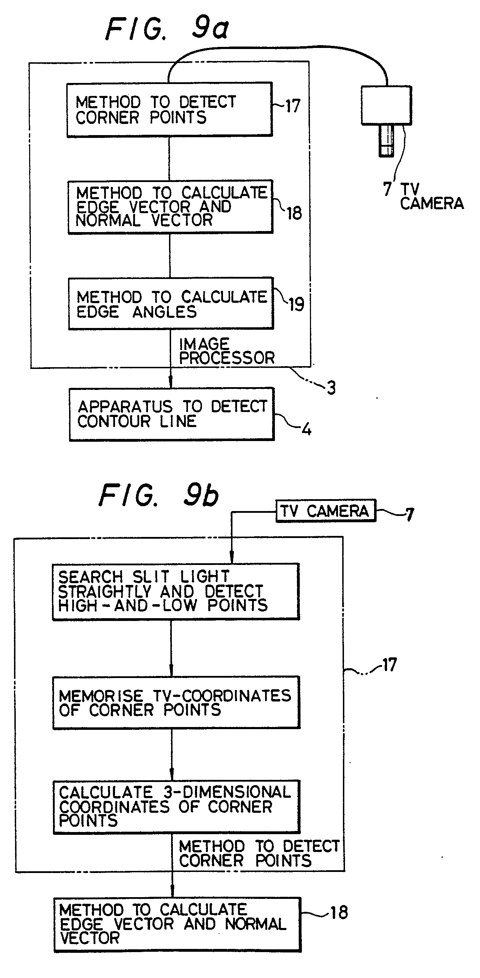

Fig. 9b shows in detail a flow which proceeds within the corner point detection means 17. The slit light beams falling on the object 1 form steps as shown in Fig. 5. Therefore, the slit light beams are searched straightly to find the four corner points $P_1$, $P_2$, $P_3$ and $P_4$. Subsequently, as to the corner points $P_1$, $P_2$, $P_3$ and $P_4$, the coordinates on the TV screen are stored. Further, points corresponding to the corner points $P_1$, $P_2$, $P_3$ and $P_4$ are referred to in a distance map stored, to obtain the three-dimensional positions thereof. Here, the 'distance map' signifies the correspondence between points on the screen and points in the space as measured in advance.

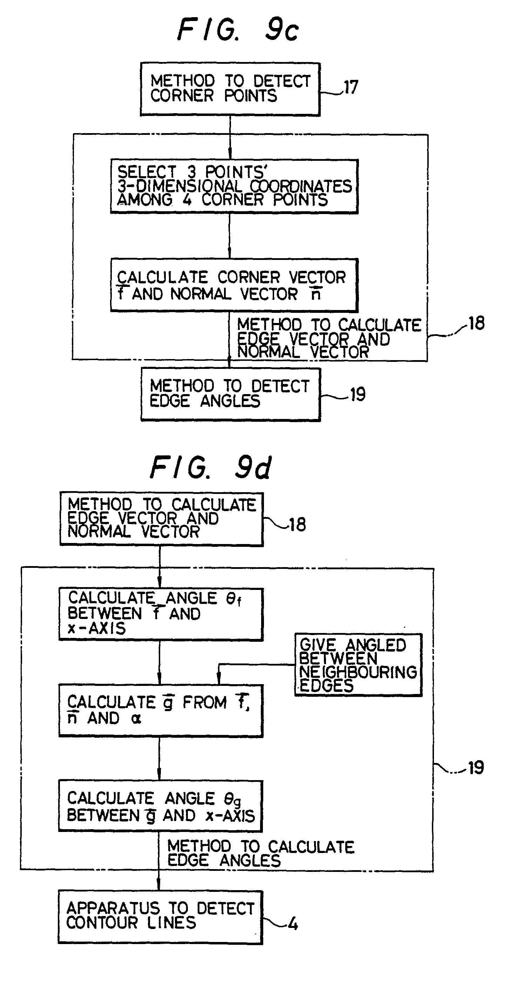

Fig. 9c shows in detail a flow which proceeds within the edge vector and normal vector calculation means 18. First, three of the four points sent from the corner point detection means 17 are selected. Subsequently, using Eqs. (1) and (2), the edge vector $\vec{f}$ and the normal vector $\vec{n}$ are calculated from the spatial coordinates of the three points. Of course, they can also be evaluated from the coordinates of the four points by the use of the method of least squares or the like.

Fig. 9d shows a flow which proceeds within the edge angle calculation means 19. First, the angle $\theta_f$ defined between $\vec{f}$ and the x-axis on the screen is calculated on the basis of Eq. (3). Next, the direction vector $\vec{g}$ of the edge adjoining the edge line of $\vec{f}$ is calculated, and the angle $a$ defined by $\vec{f}$ and $\vec{g}$ is given from stored data. That is, the stored data of $a$ is read out, and on the basis of the data of $\vec{f}$ and $\vec{n}$ sent from the calculation means 18, $\vec{g}$ is calculated using Eq. (4). Thereafter, the angle $\theta_g$ defined between $\vec{g}$ and the x-axis is calculated using Eq. (5).

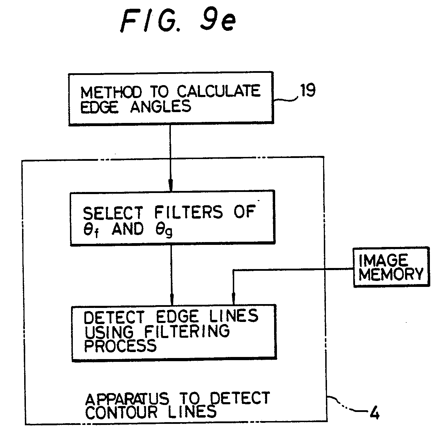

Fig. 9e shows a flow which proceeds within the contour line extracting device 4. First, the filters for detecting the edge lines are selected on the basis of the data $\theta_f$ and $\theta_g$ sent from the edge angle calculation means 19. The binary-coded or multivalue-coded image data within an image memory are received, and the edge lines are detected by a filtering process.

As described above in detail, according to the present invention, the surface shape of an object whose position and attitude are indefinite in three dimensions can be specified and extracted, and the following effects are attained:

Not only a planar object recognized in conventional fashion, but also the surface shape of a solid body can be specified, so that the recognition of a three-dimensional object is permitted; and the recognition can be done by filtering, so that high speed processing is permitted.

In addition, since the recognition of a three-dimensional object can be performed at high speed, the apparatus of the invention can execute the assembling operation etc. of the three-dimensional object in real time when applied to the visual sensations of an industrial robot etc.

Further, an effect equivalent to a three-dimensional vision can be obtained by combining a two-dimensional vision and a three-dimensional position measuring device, and the apparatus of the invention is excellent in economy and can be rendered small in size when compared with conventional three-dimensional visions based on binoculars and a slit light segmentation system.

These effects are remarkable for the recognition and handling of three-dimensional objects by an industrial robot etc.

The present invention can also be applied to pattern matching based on a contour line image concerning a slant object, by the following steps:

(1) The object 1 on the bed 2 is imaged by the TV camera 7, and the image is input to the image processor 3.

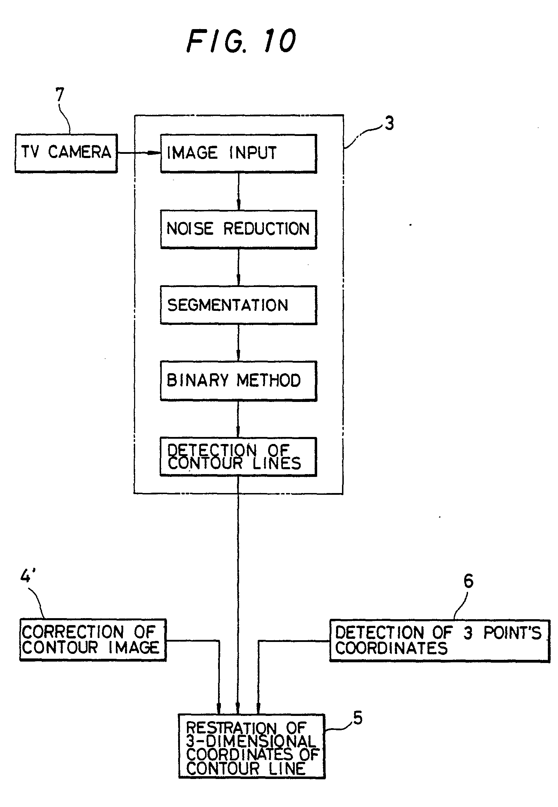

(2) The image processor 3 detects the contour lines of the object in accordance with a flow chart shown in Fig. 10.

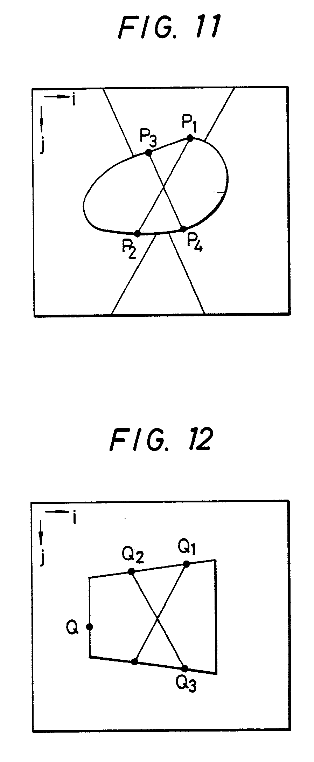

(3) Using the three-dimensional position measuring device 6, the three-dimensional positions of at least three points on the surface edge line of the object 1 are measured. In the present embodiment, a range finder which utilizes slit light is employed as the measuring device. It is a kind of distance measuring device which measures a spatial position with the principle of triangulation, and the details of which have been stated before with reference to Fig. 4. The three-dimensional position measuring device 6 is fixed to the TV camera 7, and has the slit light generators 8 and 9 on the left and right sides thereof. Since the slit light beams are projected on the object 1 aslant to the TV camera 7, these slit light beams viewed from the TV camera 7 become as shown in Fig. 11. It is accordingly possible to detect the positions on the image screen, of points $P_1$, $P_2$, $P_3$ and $P_4$ on the contour of the object. The relative positional relations between the TV camera 7 and the slit light generators 8, 9 are known, so that the three-dimensional coordinates of the points $P_1$, $P_2$, $P_3$ and $P_4$ as viewed from the TV camera 7 are found on the basis of the principle of triangulation.

(4) The three-dimensional position computing unit 5 computes the three-dimensional coordinates of the points on the contour line on the basis of the three-dimensional coordinates of at least three points among the four points obtained in the step (3). While at least three points may be used for finding the relations between image screen coordinates $(i, j)$ and the spatial coordinates $(x, y, z)$, the relations should more preferably be computed from the coordinates of the four points by the use of a mathematical process such as the method of least squares so as to enhance the precision. At that time, the distortion of the contour image dependent upon the distance and the distortion of the lens system are corrected by an image correction device 4'. For example, let's consider the distortion dependent upon the distance. Although a section obtained by cutting a prism obliquely is a rectangle, it becomes trapezoidal as shown in Fig. 12 when viewed from just above by the TV camera 7. In this case, assuming that the positions $(i_1, j_1)$, $(i_2, j_2)$ and $(i_3, j_3)$ of respective points $Q_1$, $Q_2$ and $Q_3$ on the image screen and the coordinates $(x_1, y_1, z_1)$, $(x_2, y_2, z_2)$ and $(x_3, y_3, z_3)$ thereof as viewed from the TV camera 7 have been found, the coordinates $(x, y, z)$ of a point $Q (i, j)$ are given by the following equations:

$$x = x_1 + \{(i-i_1)a_i + (j-j_1)a_j\}z/z_1 \tag{6}$$

$$y = y_1 + \{(i-i_1)b_i + (j-j_1)b_j\}z/z_1 \tag{7}$$

$$z = z_1 + \{(i-i_1)c_i + (j-j_1)c_j\}z/z_1 \tag{8}$$

Here,

$$a_i = \frac{(x_2-x_1)(j_3-j_1)z_1/z_2 - (x_3-x_1)(j_2-j_1)z_1/z_3}{(i_2-i_1)(j_3-j_1) - (i_3-i_1)(j_2-j_1)} \tag{9}$$

$$a_j = \frac{(x_2-x_1)(i_3-i_1)z_1/z_2 - (x_3-x_1)(i_3-i_1)z_1/z_3}{(j_2-j_1)(j_3-i_1) - (j_3-j_1)(i_3-i_1)} \tag{10}$$

$b_i$, $b_j$ and $c_i$, $c_j$ are respectively obtained by substituting $y$ and $z$ for $x$ in Eqs. (9) and (11).

In the above way, the three-dimensional coordinates of the contour line can be obtained.

Thus, according to the present embodiment, the three-dimensional information of the position and attitude, etc. of an object can be known, so that the shape of the object viewed from the front thereof, for example, can be restored, to permit recognition by pattern matching. Besides, the three-dimensional information can be obtained at high speed, so that the embodiment can perform the assembling operation etc. of a three-dimensional object in real time when utilized for the visual sensations of an industrial robot etc. Further, an effect equivalent to a three-dimensional vision can be attained by combining a two-dimensional vision and a three-dimensional position measuring device, so that the embodiment is excellent in economy and can be rendered small in the size of the apparatus when compared with the conventional three-dimensional visions based on binoculars and a slit light segmentation system.

As described above in detail, according to the present invention, the three-dimensional information of a plane image can be recognized at high speed by combining a two-dimensional vision and a three-dimensional position measuring device. Therefore, when utilized for a visual system in, for example, an industrial robot, the invention makes it possible to perform the recognition, handling etc. of a three-dimensional object in real time and is remarkably effective to enhance the efficiencies of the operations and to economize the operations.

# 0 157 299

## Claims

1. A vision system comprising an imaging device which takes a two-dimensional image of an object, an image processing device (3) which analyzes the two-dimensional image to detect a contour-line, a three-dimensional position measuring device (6) which can measure three-dimensional positions of at least three points on the contour line, characterized by an image correcting device (4') which makes desired corrections for the contour line, and a three-dimensional position computing device (5) which computes three-dimensional coordinates of the contour line on the basis of results of the three-dimensional position measurement and results of the contour line corrections, to restore the three-dimensional positions thereof.

2. A vision system according to claim 1, characterized in that said three-dimensional position measuring device (6) measures from a two-dimensional image of an object (1) to be recognized, three-dimensional positions of at least three points of a contour line of a specified polygonal plane of an object surface of the image; said image processing device (3) is arranged to find on the basis of the three-dimensional position information, direction vectors of respective sides of the edge line as well as a normal vector of the polygonal plane and also edge angles of the respective sides of the edge line relative to a specified direction; and in that contour line extraction means (4) are provided to select a filter suited for the polygonal plane on the basis of the direction vectors, the normal vector and the edge angles and to detect the edge line from two-dimensional image data of the object via a filtering process of the filter.

3. A vision system according to claim 2, characterized in that said three-dimensional position measurement means (6) projects slit light beams on the specified polygonal plane of the object to-be-recognized, images intersection points between the edge line of the polygonal plane and the slit light beams, and measures the three-dimensional positions concerning at least three of the intersection points on the basis of relative positional relations between directions of the slit light beams and an imaging direction.

## Patentansprüche

1. Bildsystem, umfassend eine Abbildungsvorrichtung, die ein zweidimensionales Bild eines Objekts erzeugt, eine Bildverarbeitungsvorrichtung (3), die das zweidimensionale Bild analysiert unter Erfassung einer Konturlinie, eine dreidimensionale Lagemeßvorrichtung (6), die dreidimensionale Positionen von wenigstens drei Punkten auf der Konturlinie messen kann, gekennzeichnet durch eine Bildkorrekturvorrichtung (4'), die gewünschte Korrekturen der Konturlinie ausführt, und eine dreidimensionale Lagerechenvorrichtung (5), die dreidimensionale Koordinaten der Konturlinie auf der Grundlage der Ergebnisse der dreidimensionalen Lagemessung und der Ergebnisse der Konturlinienkorrekturen berechnet zur Wiederherstellung der dreidimensionalen Positionen der Konturlinie.

2. Bildsystem nach Anspruch 1, dadurch gekennzeichnet, daß die dreidimensionale Lagemeßvorrichtung (6) aus einer zweidimensionalen Abbildung eines zu erkennenden Objekts (1) dredimensionale Lagen von wenigstens drei Punkten einer Konturlinie einer bestimmten polygonalen Ebene einer Objektfläche der Abbildung mißt; daß die Bildverarbeitungsvorrichtung (3) so ausgelegt ist, daß sie auf der Grundlage der dreidimensionalen Lageinformation Richtungsvektoren jeweiliger Seiten der Randlinie sowie einen Normalvektor der polygonalen Ebene und außerdem Randwinkel der jeweiligen Seiten der Randlinie relativ zu einer angegebenen Richtung findet; und daß eine Konturlinien - Extraktionsvorrichtung (4) vorgesehen ist, die ein für die polygonale Ebene geeignetes Filter auf der Grundlage der Richtungsvektoren, des Normalvektors und der Randwinkel auswählt und die Randlinie aus zweidimensionalen Abbildungsdaten des Objekts über ein Filterverfahren des Filters erfaßt.

3. Bildsystem nach Anspruch 2, dadurch gekennzeichnet, daß die dreidimensionale Lagemeßvorrichtung (6) Spaltlichtstrahlen auf die angegebene polygonale Ebene des zu erkennenden Objekts projiziert, Schnittpunkte zwischen der Randlinie der polygonalen Ebene und den Spaltlichtstrahlen abbildet und die dreidimensionalen Lagen, die wenigstens drei der Schnittpunkte betreffen, auf der Grundlage relativer Lagebeziehungen zwischen Richtungen der Spaltlichtstrahlen und einer Abbildungsrichtung mißt.

## Revendications

1. Système d'observation comportant un dispositif de formation d'images, qui forme une image bidimensionnelle d'un object, un dispositif (3) de traitement des images, qui analyse l'image bidimensionnelle pour détecter une ligne de contour, un dispositif (6) de mesure de positions dans trois dimensions, qui peut mesurer des positions dans trois dimensions d'au moins trois points sur la ligne de contour, caractérisé par un dispositif (4') de correction d'images, qui effectue des corrections désirées pour la ligne de contour, et un dispositif (5) de calcul de positions dans trois dimensions, qui calcule des coordonnées en trois dimensions de la ligne de contour sur la base des résultats de la mesure de positions dans trois dimensions et de résultats de correction de la ligne de contour, pour rétablir les positions dans trois dimensions de la ligne de contour.

2. Système d'observation selon la revendication 1, caractérisé en ce que ledit dispositif (6) de mesure de positions dans trois dimensions mesure, à partir d'une image bidimensionnelle de l'objet (1) devant être

6

**0 157 299**

identifié, des positions dans trois dimensions d'au moins trois points d'une ligne de contour d'un plan polygonal spécifié d'une surface objet de l'image; ledit dispositif (3) de traitement des images est agencé de manière à déterminer, sur la base de l'information des positions dans trois dimensions, des vecteurs de direction de côtés respectifs de la ligne de bord ainsi qu'un vecteur normal du plan polygonal et également des angles de bord des côtés respectifs de la ligne de bord par rapport à une direction spécifiée; et qu'il est prévu des moyens (4) d'extraction de la ligne de contour pour sélectionner un filtre approprié pour le plan polygonal sur la base des vecteurs de direction, du vecteur normal et des angles de bord et pour détecter la ligne de bord à partir de données de l'image bidimensionnelle de l'objet, moyennant une opération de filtrage exécutée par le filtre.

3. Système d'observation selon la revendication 2, caractérisé en ce que lesdits moyens (6) de mesure de positions dans trois dimensions projettent des faisceaux de lumière en forme de traits sur le plan polygonal spécifié de l'objet devant être identifié, formant l'image des points d'intersection entre la ligne de bord du plan polygonal et les faisceaux de lumière en forme de traits et mesurent les positions dans trois dimensions concernant au moins trois des points d'intersection sur la base des relations relatives de positionnement entre les directions des faisceaux de lumière en forme de traits et une direction de formation des images.

*FIG. 1*

TV CAMERA → IMAGE INPUT

↓

NOISE REDUCTION

↓

SEGMENTATION

↓

BINARY OR GRAY METHOD

↓

DETECTION OF CONTOUR LINES

↓

CALCULATION OF GRAVITATIONAL CENTER ETC.

*FIG. 2a*

TV CAMERA

PLANE OF OBJECT

⇩

TV IMAGE

*FIG. 2b*

TV CAMERA

PLANE OF OBJECT

⇩

TV IMAGE

1

# FIG. 3

# F I G. 4

0 157 299

FIG. 5

FIG. 6

FIG. 7

FIG. 8a

FIG. 8b

4

## FIG. 9a

```
┌─────────────────────────────────────────┐
│  ┌──────────────────────────┐            │
│  │ METHOD TO DETECT         │~17         │
│  │ CORNER POINTS            │            │
│  └──────────────────────────┘            │
│              │                           │
│  ┌──────────────────────────┐            │
│  │ METHOD TO CALCULATE      │            │
│  │ EDGE VECTOR AND          │~18         │
│  │ NORMAL VECTOR            │            │
│  └──────────────────────────┘            │
│              │                           │
│  ┌──────────────────────────┐            │
│  │ METHOD TO CALCULATE      │~19         │
│  │ EDGE ANGLES              │            │
│  └──────────────────────────┘            │
│              │     IMAGE                 │
│              │     PROCESSOR             │
└──────────────┼───────────────────────────┘
               │                          ~3
  ┌──────────────────────────┐
  │ APPARATUS TO DETECT      │
  │ CONTOUR LINE             │~4
  └──────────────────────────┘
```

7 TV CAMERA

## FIG. 9b

TV CAMERA ~7

```
┌─────────────────────────────────────────┐
│  ┌──────────────────────────┐            │
│  │ SEARCH SLIT LIGHT        │            │
│  │ STRAIGHTLY AND DETECT    │            │
│  │ HIGH-AND-LOW POINTS      │            │
│  └──────────────────────────┘            │
│              │                      ~17   │
│  ┌──────────────────────────┐            │
│  │ MEMORISE TV-COORDINATES  │            │
│  │ OF CORNER POINTS         │            │
│  └──────────────────────────┘            │
│              │                           │
│  ┌──────────────────────────┐            │
│  │ CALCULATE 3-DIMENSIONAL  │            │
│  │ COORDINATES OF CORNER    │            │
│  │ POINTS                   │            │
│  └──────────────────────────┘            │
│              │   METHOD TO DETECT        │
│              │   CORNER POINTS           │
└──────────────┼───────────────────────────┘
               │
  ┌──────────────────────────┐
  │ METHOD TO CALCULATE      │~18
  │ EDGE VECTOR AND NORMAL   │
  │ VECTOR                   │
  └──────────────────────────┘
```

## FIG. 9c

```
┌─────────────────────┐
│ METHOD TO DETECT    │——17
│ CORNER POINTS       │
└─────────────────────┘
          │
┌───────────────────────────────────────────┐
│  ┌─────────────────────────────────────┐  │
│  │ SELECT 3 POINTS'                    │  │
│  │ 3-DIMENSIONAL COORDINATES           │  │
│  │ AMONG 4 CORNER POINTS               │  │
│  └─────────────────────────────────────┘  │
│                  │                         │
│  ┌─────────────────────────────────────┐  │
│  │ CALCULATE CORNER VECTOR             │  │
│  │ $\bar{f}$ AND NORMAL VECTOR $\bar{n}$│  │
│  └─────────────────────────────────────┘  │
│           METHOD TO CALCULATE       ——18  │
│           EDGE VECTOR AND                  │
│           NORMAL VECTOR                    │
└───────────────────────────────────────────┘
          │
┌─────────────────────┐
│ METHOD TO DETECT    │——19
│ EDGE ANGLES         │
└─────────────────────┘
```

## FIG. 9d

```
┌─────────────────────┐
│ METHOD TO CALCULATE │——18
│ EDGE VECTOR AND     │
│ NORMAL VECTOR       │
└─────────────────────┘
          │
┌───────────────────────────────────────────────┐
│  ┌──────────────────────┐                      │
│  │ CALCULATE ANGLE $\theta_f$                   │
│  │ BETWEEN $\bar{f}$ AND │     ┌──────────────┐ │
│  │ x-AXIS               │     │ GIVE ANGLED  │ │
│  └──────────────────────┘     │ BETWEEN      │ │
│             │                 │ NEIGHBOURING │ │
│  ┌──────────────────────┐     │ EDGES        │ │
│  │ CALCULATE $\bar{g}$ FROM $\bar{f}$, └──────┘ │
│  │ $\bar{n}$ AND $\alpha$│                      │
│  └──────────────────────┘              ——19     │
│             │                                   │
│  ┌──────────────────────┐                      │
│  │ CALCULATE ANGLE $\theta_g$                   │
│  │ BETWEEN $\bar{g}$ AND x-AXIS                 │
│  └──────────────────────┘                      │
│           METHOD TO CALCULATE                   │
│           EDGE ANGLES                           │
└───────────────────────────────────────────────┘
          │
┌─────────────────────┐
│ APPARATUS TO DETECT │——4
│ CONTOUR LINES       │
└─────────────────────┘
```

# FIG. 9e

```
┌──────────────────────────┐
│ METHOD TO CALCULATE      │──19
│ EDGE ANGLES              │
└──────────────────────────┘
            │
            ▼
┌─────────────────────────────────────────┐
│  ┌──────────────────────┐               │
│  │ SELECT FILTERS OF     │               │
│  │ θ_f AND θ_g           │               │       ┌──────────┐
│  └──────────────────────┘               │       │ IMAGE    │
│            │                             │       │ MEMORY   │
│            ▼                             │       └──────────┘
│  ┌──────────────────────┐               │
│  │ DETECT EDGE LINES     │               │
│  │ USING FILTERING       │               │
│  │ PROCESS               │               │
│  └──────────────────────┘               │
│                                          │
│  APPARATUS TO DETECT                     │──4
│  CONTOUR LINES                           │
└─────────────────────────────────────────┘
```

# FIG. 10

```
7
┌──────────────┐      ┌──────────────────┐   3
│  TV CAMERA   │─────▶│   IMAGE INPUT    │
└──────────────┘      └──────────────────┘
                              │
                              ▼
                      ┌──────────────────┐
                      │ NOISE REDUCTION  │
                      └──────────────────┘
                              │
                              ▼
                      ┌──────────────────┐
                      │  SEGMENTATION    │
                      └──────────────────┘
                              │
                              ▼
                      ┌──────────────────┐
                      │  BINARY METHOD   │
                      └──────────────────┘
                              │
                              ▼
                      ┌──────────────────┐
                      │  DETECTION OF    │
                      │  CONTOUR LINES   │
                      └──────────────────┘
```

4'
CORRECTION OF
CONTOUR IMAGE

6
DETECTION OF 3 POINT'S
COORDINATES

5
RESTRATION OF
3-DIMENSIONAL
COORDINATES OF
CONTOUR LINE

# FIG. 11

# FIG. 12